# EUROPEAN PATENT APPLICATION

(11) **EP 4 098 156 A1**
(43) Date of publication of application: **07.12.2022**
(21) Application number: 21176788.4
(22) Date of filing: 31.05.2021
(51) Int. Cl.: A47J 31/46, F16K 15/02

(54) **PRESSURE RELIEF VALVE OF A COFFEE MACHINE**

(71) Applicant: BSH Hausgeräte GmbH, 81739 München (DE)
(72) Inventor: Einsiedler, Thomas, 83278 Traunstein (DE); Gerl, Ulrike, 83278 Traunstein (DE); Höglauer, Michael, 83246 Unterwössen (DE)

(57) **Abstract**

A pressure relief valve (10) being a part of a fluid system (11) in particular of a coffee machine, comprising a housing (12), a cover (13), a sealing (20) and a spring (14) for establishing an initial tension between the housing (12) and the cover (13) wherein the cover (13) and the housing (12) are rotatably connected to each other by a ratchet mechanism (15).

The present invention enables a pressure relief valve being a part of a fluid system of a coffee machine in which a several opening pressures can be realized with the same assembly of the pressure relief valve components. The pressure relief valve can be produced cost effectively due to the ability to use less precise tolerances of each of the pressure relief valve component.

## Description

The present invention relates to a pressure relief valve being a part of a fluid system in particular of a coffee machine, comprising a housing, a cover, a sealing and a spring for establishing an initial tension between the housing and the cover.

The pressure relief valves are known from the state of the art. The pressure relief valves are widely used in different types of devices e.g. coffee machines. The purpose of using the safety valves is to protect devices from damages arising from e.g. overpressure. Automatic coffee machines are provided with a various types of valves for regulating, directing and controlling the flow of media like air or water through the coffee machine systems. Valves are necessary for automation of processes inside the coffee machine. Some of valves have a spring for spring-loading. Relief valves commonly use a spring to keep the valve shut, but allow excessive pressure to force the valve open against the spring-loading. In known solutions, the necessary force on the sealing components is realized via a spring. The spring preload is determined by the free length between the housing and the cover. The length is a fixed dimension defined by the components without possibility to adjust it.

The patent application EP 2 636 343 A1 discloses a device for producing milk foam and/ or heated milk comprises a steam supply line with a steam supply opening. The steam supply line has a narrowing first nozzle to achieve a suction effect for sucking in milk at a suction opening arranged in the first nozzle. The device also has an air supply device for supplying air into the steam supply line through an air supply opening. The steam supply line has a narrowing second nozzle for the purpose of generating a suction effect at the air supply opening arranged in the second nozzle. The first nozzle is arranged downstream of the second nozzle with respect to the steam flow direction.

The patent application DE 10 2011 084 424 A1 discloses a coffee machine with a water line, wherein the water line interconnects a pump for pressurizing water provided at the pump, a boiler and a brewing group for carrying out the brewing process for coffee preparation, is designed and further configured with simple constructional means with a view to simple handling and an excellent brewing result in such a way that a controllable pressure relief valve for regulating the water pressure acting on the brewing group is assigned to the water line.

It is the object of the present invention to provide a further development with an advantage over the state of the art. A further object of the invention is to decrease manufacturing costs of producing the pressure relief valve components due to the ability to use less precise tolerances of each of the pressure relief valve component.

This object is solved by a pressure relief valve being a part of a fluid system in particular of a coffee machine, comprising a housing, a cover, a sealing and a spring for establishing an initial tension between the housing and the cover.

The pressure relief valve is a type of safety valve used to control or limit the pressure in a system e.g. the fluid system of an automatic coffee machine. The exceeded pressure might affect the brewing process or even cause a device failure. The pressure relief valve is a simple two part element comprising the cylindrical housing and the cylindrical cover. The housing and the cover are rotatably connected to each other by a ratchet mechanism. The ratchet mechanism is a mechanical connection that allows the rotary of cooperation elements only in one direction. The spring is located inside the housing. The pressure relief valve is set to open at a predetermined set pressure which is precisely defined. Exceeded pressure overcome the tension of the spring and open the pressure relief valve to protect the coffee machine. When the fluid system pressure is stabilized the pressure relief valve is automatically closed by the return of the spring which forces the sealing to close the valve. The positive effect is that the pressure relief valve protects the device against damage caused by overpressure.

In a preferred embodiment of the invention the ratchet mechanism comprises at least one latching hook and at least one protrusion with at least one sloping teeth. The pressure relief valve is a device in which the necessary spring on the sealing components is converted via spring. The initial spring tension depends on the distance between the cover and the housing. In the preferred embodiment of the invention the latching hook is a part of the cover and the protrusion is a part of the housing. The latching hook is a simple element located on the inner side of the cover. The cover with the latching hook is inserted onto the housing in order to be assembled. The protrusion is provided on the outer surface of the housing. The protrusion is a ring shape element protruded from the housing. The protrusion has at least one sloping tooth. Advantageously the protrusion has two or three sloping teeth. The advantage is that the pressure relief valve components can be produced with wider tolerances so the production is cheaper.

In a preferred embodiment of the invention the protrusion is a ring shape element and has at least one gap for mounting the cover. The gap is provided to make the insert of the cover into the housing possible. After introducing the cover into the housing, the elements are being rotated against each other. The latching hooks engages the protrusion with the sloping teeth and the connection is established. The positive effect of such solution is that a several opening pressures of the pressure relief valve can be realized with the same assembly of the cover with the housing.

In a preferred embodiment of the invention the distance between the housing and the cover is set up manually. The connection between the cover and the housing have a several detent positions. Each detent position results in a different preload of the spring inside the housing. The individual locking position is achieved by rotating the cover in relation to the housing. The adjustability of the cover and the housing makes possible to react to components tolerances and the desired force of the spring can be set based on measuring the spring force on each position during assembling or by setting the preload to the desired pressure level after a pressure test. The assembly is performed on the assembly line.

In another embodiment of the invention a force which is necessary to close the pressure relief valve by the sealing is generated by the spring. When the pressure inside the fluid system of the coffee machine exceeds the safe value and overcome the spring force, the pressure relief valve opens and the pressure inside the fluid system is stabilized. After the pressure stabilization, the spring automatically closes the pressure relief valve acting on the sealing of the pressure relief valve.

In another embodiment of the invention the cover and the housing are screw connected to each other. The pressure relief valve is a device in which the necessary force on the sealing components is converted via spring. The initial spring tension depends on the distance between the cover and the housing. In preferred embodiment of the invention the cover has an internal thread and the housing is provided with an external thread. Thanks to the threaded surfaces the cover can be screwed with the housing. The positive effect is that such connection is stepless and has multiple detent positions.

The present invention enables a pressure relief valve being a part of a fluid system of a coffee machine in which a several opening pressures can be realized with the same assembly of the pressure relief valve components. The pressure relief valve can be produced cost effectively due to the ability to use less precise tolerances of each of the pressure relief valve component.

The construction of the invention, however, together with additional objects and corresponding advantages will be best understood from the following description of specific embodiments and in connection with the accompanying drawing.

In the drawing:
- Fig. 1: shows a schematic view of a fluid system of a coffee machine with a pressure relief valve.
- Fig. 2: shows an isometric view of the pressure relief valve in a disassembled state.
- Fig. 3: shows the pressure relief valve cross section.

In cooperation with attached drawing, the technical contents and detailed description of the present invention are described thereinafter according to a preferable embodiment being not used to limit its executing scope. Any equivalent variation and modification made according to appended claims is all covered by the claims claimed by the present invention.

In the following description of the preferred embodiments of the present invention, similar identical reference numbers designate identical of comparable components.

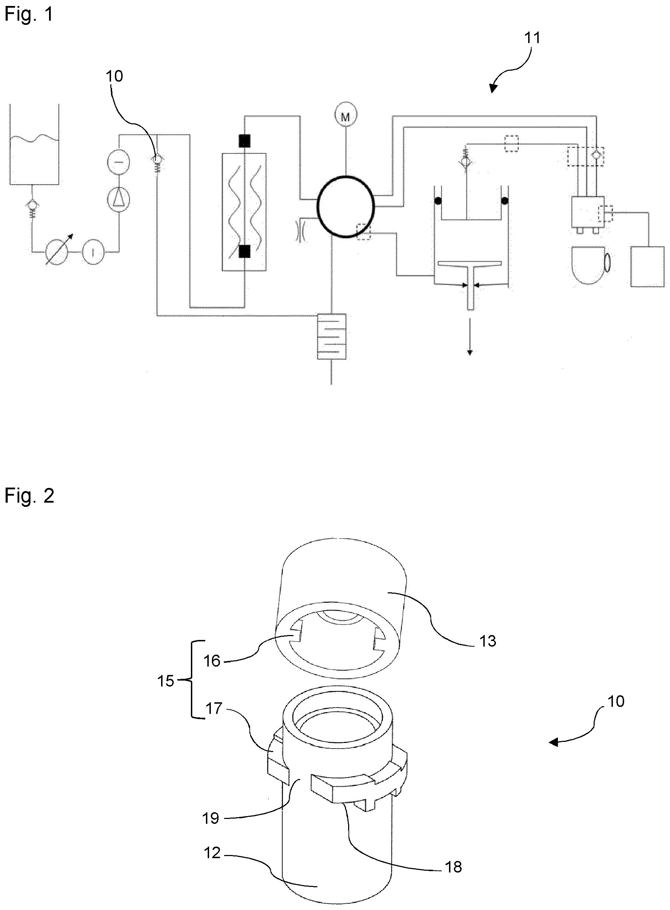

Fig. 1 shows a schematic view of a fluid system 11 of a coffee machine. The pressure relief valve 10 is an element of the fluid system 11 of the coffee machine. The system comprises a water tank, a variety of valves and sensors, a flowmeter, water pump, a brewing chamber, a drip pan and multiple of connectors between the elements. All mentioned elements are shown schematically in the fig. 1.

Fig. 2 shows an isometric view of a pressure relief valve 10 in a disassembled state. The pressure relief valve 10 consist of a cover 13 and a housing 12. The cover 13 is a cylindrical element which is assembled with the housing 12 by a ratchet mechanism 15. For this reason the diameter of the cover 13 is bigger than the diameter of the housing 12. The ratchet mechanism 15 consist of two latching hooks 16 placed on an inner surface of the cover 13 and two protrusions 17 placed on the outer surface of the housing 12. The protrusions 17 are designed in such a way that there are two gaps 19 between the protrusions 17 for introducing the latching hooks 16. Protrusions 17 are provided with three sloping teeth 18. The latching hooks 16 can engaged with the sloping teeth 18 by rotating the cover 13 in relation to the housing 12. The latching hooks 16 can be engaged with any of the sloping tooth 18 and the selection of the right sloping tooth 18 depends on the measurements (e.g. desired fluid system pressure, tolerances of the pressure relief valve components).

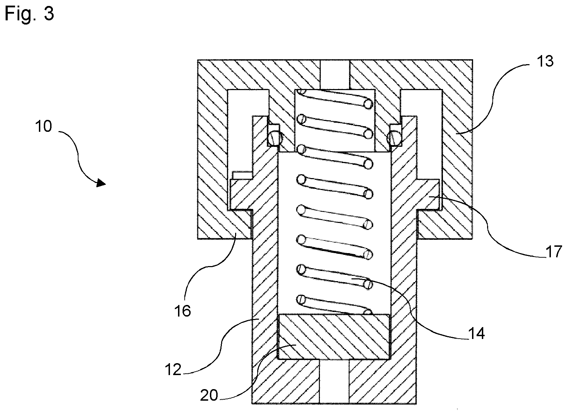

Fig. 3 shows the cross section of the pressure relief valve 10. The pressure relief valve 10 is shown in assembled state. The connection between the cover 13 and the housing 12 have a several detent positions. Each detent position results in a different preload of the spring 14 inside the housing 12. The individual locking position is achieved by rotating the cover 13 in relation to the housing 12. The latching hooks 16 of the cover 13 are engaged with the protrusions 17. The spring 14 is provided inside the housing 12 and the force of the spring 14 keep the sealing 20 in a position which provides that the pressure relief valve 10 is in closed position. The closed position of the pressure relief valve 10 is when the pressure inside the fluid system 11 (not shown on the fig.) do not exceed the force of the spring 14. When the pressure exceeds the pressure level and overcome the force of the spring 14, the pressure relief valve 10 opens and the pressure inside the device is stabilized. After the pressure stabilization, the spring 14 automatically back to the previous state and closes the pressure relief valve 10 by pushing the sealing 20 of the pressure relief valve 10.

The present invention enables a pressure relief valve being a part of a fluid system of a coffee machine in which a several opening pressures can be realized with the same assembly of the pressure relief valve components. The pressure relief valve can be produced cost effectively due to the ability to use less precise tolerances of each of the pressure relief valve component.

### REFERENCE SIGNS

- 10: pressure relief valve
- 11: fluid system
- 12: housing
- 13: cover
- 14: spring
- 15: ratchet mechanism
- 16: latching hook
- 17: protrusion
- 18: sloping tooth
- 19: gap
- 20: sealing

## Claims

1. A pressure relief valve (10) being a part of a fluid system (11) in particular of a coffee machine, comprising a housing (12), a cover (13), a sealing (20) and a spring (14) for establishing an initial tension between the housing (12) and the cover (13) **characterized in that** the cover (13) and the housing (12) are rotatably connected to each other by a ratchet mechanism (15).

2. The pressure relief valve (10) according to claim 1, **characterized in that** the ratchet mechanism (15) comprises at least one latching hook (16) and at least one protrusion (17) with at least two sloping teeth (18).

3. The pressure relief valve (10) according to any of the preceding claims, **characterized in that** the latching hook (16) is a part of the cover (13) and the protrusion (17) is a part of the housing (12).

4. The pressure relief valve (10) according to any of the preceding claims, **characterized in that** the protrusion (17) is a ring shape element and has at least one gap (19) for mounting the cover (13).

5. The pressure relief valve (10) according to any of the preceding claims, **characterized in that** the distance between the housing (12) and the cover (13) is set up manually.

6. The pressure relief valve (10) according to any of the preceding claims, **characterized in that** a force necessary to close the pressure relief valve (10) by the sealing (20) is generated by the spring (14).

7. The pressure relief valve (10) according to claim 1, **characterized in that** the cover (13) and the housing (12) are screw connected to each other.
